# EUROPEAN PATENT APPLICATION

(11) **EP 3 840 234 A1**
(43) Date of publication of application: **23.06.2021**
(21) Application number: 20187536.6
(22) Date of filing: 23.07.2020
(51) Int. Cl.: H04B 1/38, F24D 19/10

(54) **HOT WATER SUPPLY SYSTEM AND REMOTE CONTROLLER THEREOF**

(30) Priority: 16.12.2019 JP 2019226096
(71) Applicant: Panasonic Intellectual Property Management Co., Ltd., Osaka-shi, Osaka 540-6207 (JP)
(72) Inventor: MORINO, Naoki, Osaka, 540-6207 (JP); SHIMOBOU, Kazuya, Osaka, 540-6207 (JP); UCHITANI, Kazuo, Osaka, 540-6207 (JP)
(74) Representative: Eisenführ Speiser

(57) **Abstract**

[Object]

It is an object of the present invention to provide a hot water supply system and a remote controller thereof provided a wireless LAN module and having excellent usability.

[Solving Means]

The remote controller of the hot water supply system is characterized in that a wireless LAN module 4, an antenna 5 of the wireless LAN module 4, and a control board 3 are placed in an outline case 6, and the antenna 5 is placed such that the control board 3 does not overlap with the antenna 5 in a radiation direction of radio waves of the antenna 5. Output of radio waves used by a wireless LAN is small, and the radio waves are easily attenuated by obstruction. However, since the antenna 5 of the wireless LAN module 4 is placed such that it does not overlap with the control board 3 with respect to all directions, it is possible to suppress the attenuation of radio waves used by the wireless LAN caused by the control board 3 (metal).

## Description

### [TECHNICAL FIELD]

The present invention relates a remote controller of a hot water supply system.

### [BACKGROUND TECHNIQUE]

A conventional remote controller of a hot water supply system provided with a wireless LAN module of this kind includes search-stopping means so that noise caused by searching action of a wireless LAN router is not generated in a state where intercom function capable of mutually calling between a plurality of remote controllers is operating (see patent document 1 for example).

### [PRIOR ART DOCUMENT]

### [PATENT DOCUMENT]

[Patent Document 1] Japanese Patent Application Laid-open No.2017-92721

### [SUMMARY OF THE INVENTION]

### [PROBLEM TO BE SOLVED BY THE INVENTION]

However, according to the conventional configuration, since the searching operation of the wireless LAN router is stopped in a state where the intercom function is operating, there is a problem that usability of the hot water supply system including the wireless LAN module provided in the remote controller is deteriorated.

The present invention is for solving the conventional problem, and it is an object of the invention to provide a hot water supply system and a remote controller thereof provided with a wireless LAN module and having excellent usability.

### [MEANS FOR SOLVING THE PROBLEM]

To solve the conventional problem, the present invention provides a remote controller of a hot water supply system, wherein a wireless LAN module, an antenna of the wireless LAN module, and a control board are placed in an outline case, and the antenna is placed such that the control board does not overlap with the antenna in a radiation direction of radio waves of the antenna.

Output of radio waves used by a wireless LAN is small, and the output is easily attenuated by obstruction, but since an antenna is placed such that it does not overlap with the control board in a radiation direction of radio waves used by the wireless LAN, attenuation of radio waves caused by the control board (metal) can be suppressed.

### [EFFECT OF THE INVENTION]

The present invention provides a hot water supply system and a remote controller thereof provided with a wireless LAN module and having excellent usability.

### [BRIEF DESCRIPTION OF THE DRAWINGS]

Fig. 1 is a block diagram of a hot water supply system in an embodiment of the present invention;
Fig. 2(a) is a front view of a bath remote controller of the embodiment, and Fig. 2(b) is a front view of a kitchen remote controller; and
Fig. 3 is a back view of an interior of the kitchen remote controller of the embodiment.

### [MODE FOR CARRYING OUT THE INVENTION]

A first invention provides a remote controller of a hot water supply system, wherein a wireless LAN module, an antenna of the wireless LAN module, and a control board are placed in an outline case, and the antenna is placed such that the control board does not overlap with the antenna in a radiation direction of radio waves of the antenna.

Output of radio waves used by the wireless LAN is small, and the output is easily attenuated by obstruction. However, since an antenna is placed such that it does not overlap with the control board in a radiation direction of radio waves used by the wireless LAN, attenuation of radio waves caused by the control board (metal) can be suppressed.

According to a second invention, especially in the first invention, the outline case is made of resin, and the antenna is separated from an inner wall of the outline case by a predetermined distance.

If a distance between radio waves of high frequency used by the wireless LAN and obstruction such as resin is short, characteristics of the antenna is affected by its slight floating capacitance, and efficiency of output of the radio waves is deteriorated. However, since the antenna is separated from the inner wall of the outline case by the predetermined distance, the characteristics of the antenna is not affected, and deterioration of output of radio waves caused by obstruction can be suppressed.

According to a third invention, especially in the first or second invention, the remote controller of the hot water supply system is composed of a kitchen remote controller and a bath remote controller, and the wireless LAN module is placed in the kitchen remote controller.

Since the wireless LAN router is placed in a room in many cases, if the wireless LAN module is provided in the kitchen remote controller rather than in the bath remote controller, it is possible to suppress attenuation of radio waves caused by the obstruction.

A fourth invention provides a hot water supply system which is operated by the remote controller of the hot water supply system according to any one of the first to third inventions.

Since the hot water supply system is operated by the remote controller of the hot water supply system having the wireless LAN module, it is possible to provide a hot water supply system having excellent usability.

An embodiment of the present invention will be described below with reference to the drawings. The invention is not limited to the embodiment.

### (Embodiment)

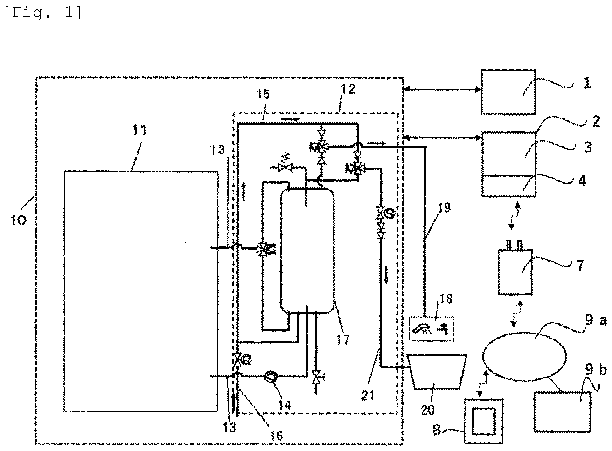

Fig. 1 is a block diagram of a hot water supply system in an embodiment of the present invention.

First, action and function of the heat pump hot water supply system will be described using Fig. 1.

The heat pump hot water supply system 10 includes a heat pump heat source machine 11 and a tank unit 12. The heat pump heat source machine 11 heats tap water by water-refrigerant heat exchange. High temperature water which is heated by the heat pump heat source machine 11 and transferred through a pipe 13 is stored in the tank unit 12. Further, the tank unit 12 mixes the stored high temperature water and tap water with each other, and supplies hot water whose temperature is set to a predetermined value by the mixing.

The tank unit 12 includes a hot water supply cycle 15.

The hot water supply cycle 15 is composed of a hot water tank 17 for storing, therein, high temperature water produced by the heat pump heat source machine 11, a water pipe 16 for supplying tap water to the hot water tank 17, a hot water supply pipe 19 for supplying high temperature water from the hot water tank 17 to a hot water supply terminal 18 of a faucet or a shower, a bath hot water supply pipe 21 for supplying hot water having predetermined temperature to a bathtub 20, and a circulation pump 14.

To heat low temperature water in the hot water tank 17 to produce high temperature water, the circulation pump 14 transfers low temperature water in the hot water tank 17 to the heat pump heat source machine 11.

The above-described operation and action of the heat pump hot water supply system 10 are controlled by a bath remote controller 1 and a kitchen remote controller 2.

A control board 3 and a wireless LAN module 4 are placed in the kitchen remote controller 2. The wireless LAN module 4 establishes communication with a wireless LAN router 7 placed in a living room or the like, and the wireless LAN module 4 is connected to a cloud server 9b through the Internet 9a.

Action of the heat pump heat source machine 11, a hot water filling operation of the bathtub 20, and operation information of the heat pump hot water supply system 10 can be checked using remote communication means 8 such as a smartphone. A user can access the cloud server 9b through the Internet 9a using the remote communication means 8. Instructions of the user are received by the wireless LAN module 4 through the Internet 9a and the wireless LAN router 7.

The user can check operation information or failure history of the heat pump hot water supply system 10 using the remote communication means 8, and can remotely make a diagnosis of a failure part. By this remote diagnosis, it is possible to swiftly repair the failure part. Therefore, it is possible to provide a hot water supply system and a remote controller thereof having excellent usability.

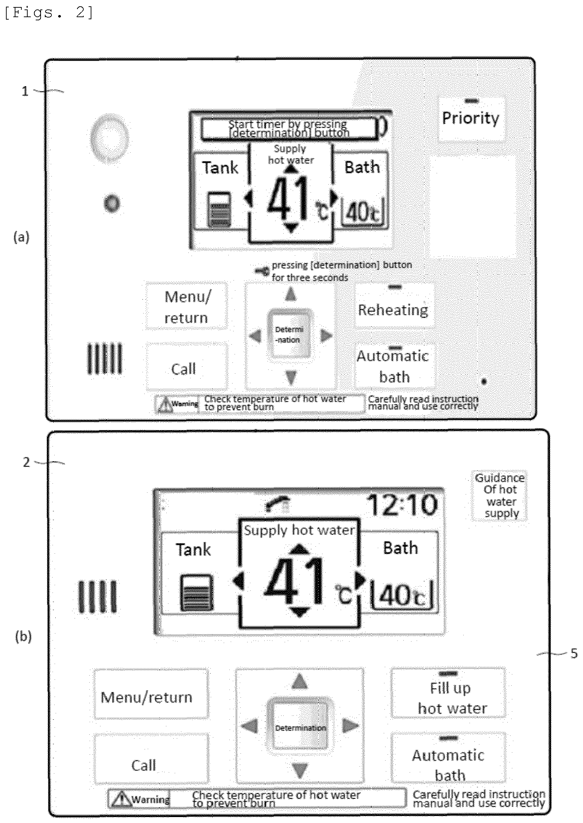

Fig. 2(a) is a front view of the bath remote controller of the embodiment. Fig. 2(b) is a front view of the kitchen remote controller of the embodiment.

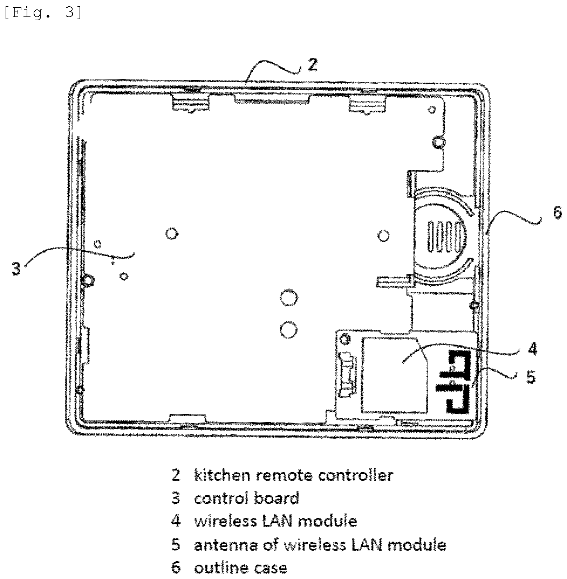

Fig. 3 is a back view of an interior of the kitchen remote controller of the embodiment.

Configuration of the remote controller of the hot water supply system in the embodiment will be described below using Fig. 3.

The kitchen remote controller 2 includes, in an outline case 6, the wireless LAN module 4, the control board 3, and an antenna 5 of the wireless LAN module 4. The antenna 5 of the wireless LAN module 4 is placed such that it does not overlap with the control board 3 with respect to all of radiation directions of radio waves. That is, the control board 3 is not provided in the radiation direction of radio waves of the antenna 5.

The outline case 6 is made of resin, the antenna 5 is separated from an inner wall of the outline case 6 by a predetermined distance, and the wireless LAN module 4 is placed in the outline case 6.

Output of radio waves used by the wireless LAN is small, and the output is easily attenuated by obstruction. However, in the remote controller of the hot water supply system of the embodiment, the antenna 5 is placed such that the radiation direction of the radio waves of the antenna 5 of the wireless LAN module 4 does not overlap with the control board 3 with respect to all directions. That is, the antenna 5 is placed such that the radiation direction of radio waves of the antenna 5 does not overlap with the control board 3 entirely. According to this, it is possible to suppress the attenuation of radio waves used by the wireless LAN caused by the control board 3 (metal).

The output of the radio waves used by the wireless LAN is small, and the output is easily attenuated by obstruction. However, since the antenna 5 of the wireless LAN module 4 and the inner wall of the outline case 6 are separated from each other by the predetermined distance in the outline case 6, the characteristics of the antenna 5 are not affected, and deterioration of the output of the radio waves caused by the obstruction can be suppressed.

The heat pump hot water supply system 10 includes the kitchen remote controller 2 and the bath remote controller 1, and the wireless LAN module 4 is placed in the kitchen remote controller 2. Since the wireless LAN router 7 is placed in a room in many cases, if the wireless LAN module 4 is provided in the kitchen remote controller 2 rather than in the bath remote controller 1, it is possible to suppress attenuation of radio waves used by the wireless LAN caused by obstruction.

### [INDUSTRIAL APPLICABILITY]

As described above, the remote controller of the hot water supply system of the present invention includes the wireless LAN module, and usability of the remote controller is excellent. Therefore, the remote controller can be applied to a hot water supply system which uses electricity, gas or the like as a heat source.

### [EXPLANATION OF SYMBOLS]

- 1: bath remote controller
- 2: kitchen remote controller
- 3: control board
- 4: wireless LAN module
- 5: antenna of wireless LAN module
- 6: outline case
- 7: wireless LAN router
- 8: remote communication means
- 9a: internet
- 9b: cloud server
- 10: heat pump hot water supply system
- 11: heat pump heat source machine
- 12: tank unit
- 13: pipe
- 14: circulation pump
- 15: hot water supply cycle
- 16: water pipe
- 17: hot water tank
- 18: hot water supply terminal
- 19: hot water supply pipe
- 20: bathtub
- 21: bath hot water supply pipe

## Claims

1. A remote controller of a hot water supply system, wherein
a wireless LAN module, an antenna of the wireless LAN module, and a control board are placed in an outline case, and
the antenna is placed such that the control board does not overlap with the antenna in a radiation direction of radio waves of the antenna.

2. The remote controller of the hot water supply system according to claim 1, wherein
the outline case is made of resin, and the antenna is separated from an inner wall of the outline case by a predetermined distance.

3. The remote controller of the hot water supply system according to claim 1 or 2, wherein
the remote controller of the hot water supply system is composed of a kitchen remote controller and a bath remote controller, and
the wireless LAN module is placed in the kitchen remote controller.

4. A hot water supply system which is operated by the remote controller of the hot water supply system according to any one of claims 1 to 3.
